Europäisches Patentamt

European Patent Office

Office européen des brevets

(19)

(11) Publication number: 0 340 442
A2

(12) # EUROPEAN PATENT APPLICATION

(21) Application number: 89105260.7

(51) Int. Cl.4: G01V 9/04

(22) Date of filing: 23.03.89

(30) Priority: 06.05.88 JP 109987/88

(43) Date of publication of application:
08.11.89 Bulletin 89/45

(84) Designated Contracting States:
AT BE CH DE ES FR GB IT LI NL SE

(71) Applicant: Schaltbau Gesellschaft mbH
Klausenburger Strasse 6
D-8000 München 80(DE)

(72) Inventor: Kobayashi, Atsuhito
No. 21-17 Takashima 1-chome
Suwa-shi Nagano(JP)
Inventor: Ono, Shoichi
No. 21-17 Takashima 1-chome
Suwa-shi Nagano(JP)
Inventor: Shiraishi, Takayuki
No. 21-17 Takashima 1-chome
Suwa-shi Nagano(JP)
Inventor: Hosayama, Kohei
No. 21-17 Takashima 1-chome
Suwa-shi Nagano(JP)

(74) Representative: Patentanwälte Grünecker,
Kinkeldey, Stockmair & Partner
Maximilianstrasse 58
D-8000 München 22(DE)

(54) Photoelectric switch.

(57) A photoelectric switch, comprising:
a heating unit formed around a beam transmission part of a light transmitting plate provided on a body having a light receiving part;
a received light quantity decision circuit for generating an electrical signal corresponding to a quantity of light received on said light receiving part, comparing the electrical signal with a set level to decide whether or not it is on the set level or below;
a temperature circuit for generating an electrical signal corresponding to a change in ambient temperature of said body;
a driving circuit for actuating said heating unit to heat on condition that the electrical signal of the temperature circuit has reached a level of set temperature or below, and that said quantity of received light has come to the set level or below.

FIG.1

# PHOTOELECTRIC SWITCH

## Description of the invention

This invention relates to a photoelectric switch with a dewing preventive applied to a front light transmitting plate provided on a body.

A photoelectric switch is utilized as a vision sensor in FA field and others, operating for detecting presence and position of an object. The photoelectric switch is a superior sensor for its long detection distance and other characteristics as compared with other contactless switch (electromagnetic induction type/electrostatic capacity type contactless switch), however, a problem is yet inherent in endurance to environment. In particular, an erroneous operation due to water splash to prevent a light transmission, dewing, freezing and the like will be problematical.

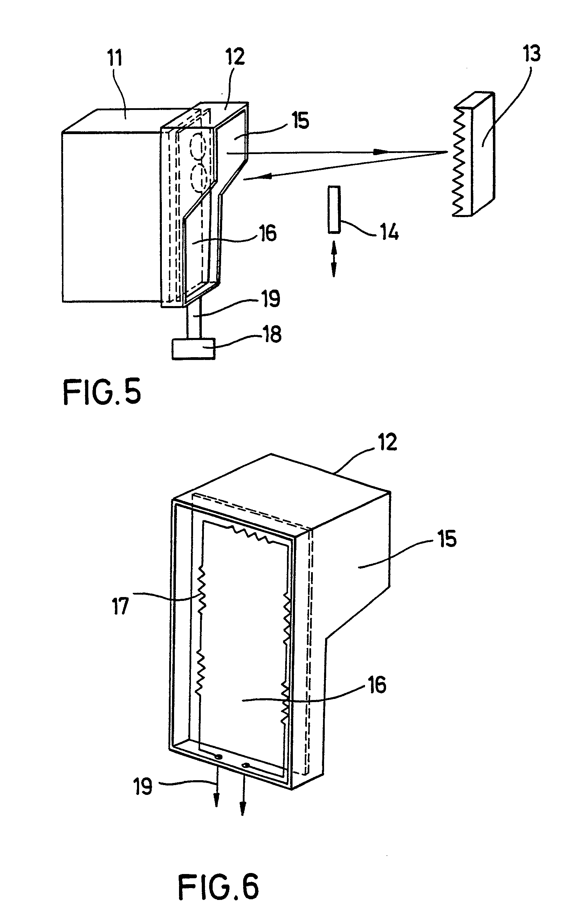

To solve such problem, there is a photoelectric switch provided with a heating hood 12 for dewing prevention on a body 11 as shown in Fig. 5 and Fig. 6. Here, Fig. 5 exemplifies a recurrent reflection type photoelectric switch, wherein a light emitting part and a light receiving part are incorporated within the body 11. That is, a light such as infrared ray or the like is projected toward a reflecting plate 13 from the light emitting part in the body 11, and a reflected light from the reflecting plate 13 is received on the light receiving part provided in the body 11 likewise. Then, when the projected light or reflected light is intercepted by an object 14 to be detected, the interception is taken as a change in the quantity of received light at the light receiving part, and thus a presence of the object 14 at a predetermined position is detected.

The heating hood 12 has a contour part 15 fitted in an outer periphery of the front of the body 11, and a light transmitting plate 16 provided within the contour part 15 and covering the front of the body 11 when installed on the body 11. A heating unit 17 by carbon resistance, heating wire or the like is provided on a peripheral edge portion of the back of the light transmitting plate 16, which is actuated to heat by carrying a current thereto from a power source 18 through a lead wire 19, thereby preventing the light transmitting plate 16 from dewing.

In the above construction, the heating hood 12 for dewing prevention is mounted on the front of the body 11 when using the photoelectric switch under the environment where dew, splashed water or the like sticks, and a current is carried to the heating unit 17 independently of an operation of the body 11, or light projection and reception, and thus asynchronously therewith. For example, a conduction to the heating unit 17 will be controlled manually by users on decision or carried out at all times. Besides, a heat sensor is mounted within the heating hood 12, and whenever temperature measured on the sensor comes to a set value, the conduction will be controlled for start and stop.

Thus, from conducting to the heating unit 17, the light transmitting plate 16 is heated from the back on which the heating unit 17 is provided, and dew or the like on the front of the light transmitting plate 16 is removed by the heat.

As shown in Fig. 6, the heating unit 17 is provided to abut on a peripheral edge portion of the back of the light transmitting plate 16, therefore a heat transfer efficiency until a light of the light transmitting plate 16 reaches a portion to pass through practically (center of the upper portion) is bad, and thus the time for removing dew on the transmitting portion is required so long unavoidably. Then in the aforementioned construction, the light transmitting plate 16 will be heated wholly, however, only the dew on the light transmitting portion may be removed as a photoelectric switch, and thus the light transmitting plate 16 need not be heated wholly. A merit of heat is low, consequently.

The heating hood 12 is that of a so-called externally fitting type to be mounted on the front of the body 11 as occasion demands, and the heating unit 17 is operated asynchronously with the body 11 of the photoelectric switch, therefore it is hard to coordinate with change in the environment. That is, as mentioned hereinbefore, a conduction to the heating unit 17 is controlled by users on decision, or carried out at all times, or is controlled according to a temperature information of the heat sensor, however, in either case, there still left is a problem in reply efficiency to change in the environment wherein a quantity of received light decreases actually due to dewing and reverts to original quantity on removal of the dew.

An object of the invention is to provide a photoelectric switch having a prevention against dewing high in a merit of heat and superior in reply efficiency to change in the environment.

## (Means to Solve the Problem)

The photoelectric switch according to this invention has a heating unit formed around a beam transmission part of the light transmitting plate provided on the body having a light receiving part. Then, further provided is a received light quantity decision circuit for generating an electrical signal corresponding to a quantity of light received on the light receiving part, comparing the electrical signal with a set level to decide whether or not it is on the set level or below, and also provided is a temperature circuit for generating an electrical signal corresponding to a change in ambient temperature of the body. Provided, still further, is a driving circuit for actuating the heating unit to heat on condition that the electrical signal of the temperature circuit has reached a level of set temperature or below, and that the quantity of received light has come to the set level or below.

In the invention, the beam transmission part only is heated by the heating unit provided around the beam transmission part of the light transmitting plate, therefore heat works efficiently, and a dew can be removed instantaneously. Then, a conduction to the heating unit is controlled on condition that ambient temperature drops and a quantity of light received by the light receiving part decreases, therefore when the quantity of received light decreases due to dewing, the conduction is controlled immediately to remove the dew, and the conduction to the heating unit can be cut off upon recovery of the quantity of received light. That is, a conduction to the heating unit can be controlled in response swiftly to a change in the environment, therefore an erroneous operation due to dewing and the like can securely be prevented.

The invention will now be described with reference to the accompanying drawings representing one embodiment thereof.

Brief Description of the Drawings

Fig. 1 is a perspective view representing a photoelectric switch given in one embodiment of the invention;

Fig. 2 is a front view showing the light transmitting plate in Fig. 1;

Fig. 3 is a circuit diagram showing a concrete configuration of each circuit in Fig. 1;

Fig. 4 is a front view showing a light transmitting plate in another embodiment of the invention;

Fig. 5 and Fig. 6 are perspective views for illustrating a prior art system.

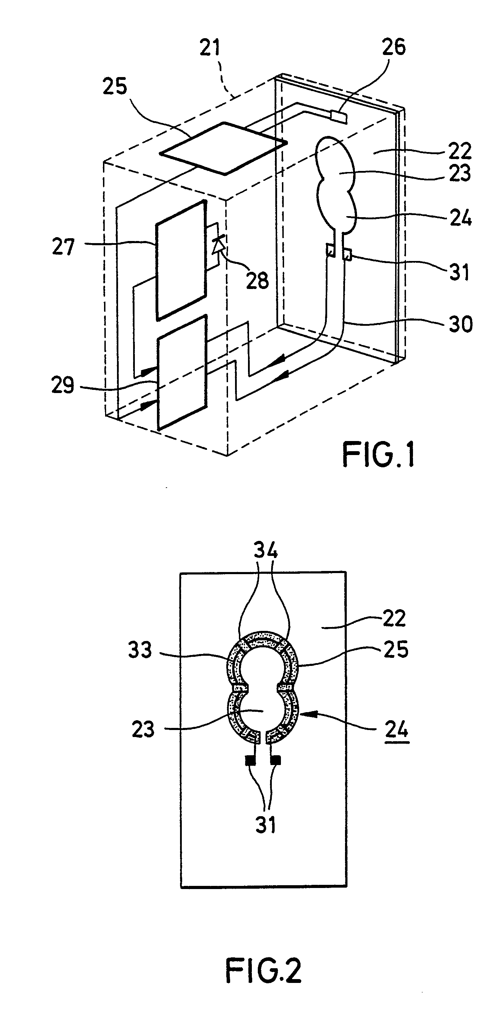

In Fig. 1, a reference numeral 21 denotes a body of a recurrent reflection type photoelectric switch, within which a light emitting part and a light receiving part are provided, while not so indicated. Then, a light transmitting plate 22 of glass or other material is provided on the front of the body 21, namely a face whereat lenses of the light emitting part and the light receiving part are opposite each other. The light transmitting plate 22 has a beam transmission part 23 through which a beam of light projected from the light emitting part and a beam of reflected light incident on the light receiving part from an external reflecting plate pass, and a heating unit 24 is provided around the beam transmission part 23.

A reference numeral 25 denotes a temperature circuit, which inputs a signal from a heat sensor 26 such as thermistor or the like mounted on the back of the light transmitting plate 22 near the heating unit 24, and generates an electrical signal corresponding to a temperature change around the body 21.

A reference numeral 27 denotes a received light quantity decision circuit provided on the light receiving part, which generates an electrical signal corresponding to a quantity of received light according to a light reception signal from a light receiving element 28, and decides whether or not a level of the electrical signal has come lower than a preset level.

A reference numeral 29 denotes a driving circuit, which actuates the heating unit 24 to heat through a lead wire 30 and an electrode 31 on condition that the electrical signal from the temperature circuit 25 has come to a level of set temperature or below, and that the quantity of received light has come to a set level or below.

The heating unit 24 is formed as shown in Fig. 2. That is, a surrounding current passage 33 of conductive material such as silver or the like and the electrodes 31 connected each to opposite ends thereof are formed around the beam transmission part 23 on the light transmitting plate 22. Then, a plurality of gaps 34 are formed halfway of the current passage 33. Further, a carbon material 35 is formed through printing on the current passage 33 including the gaps 34. The carbon material 35 is not printed on the electrodes 31. From forming such, when a current is carried between the electrodes 31, a heat is generated at portion of each gap 34.

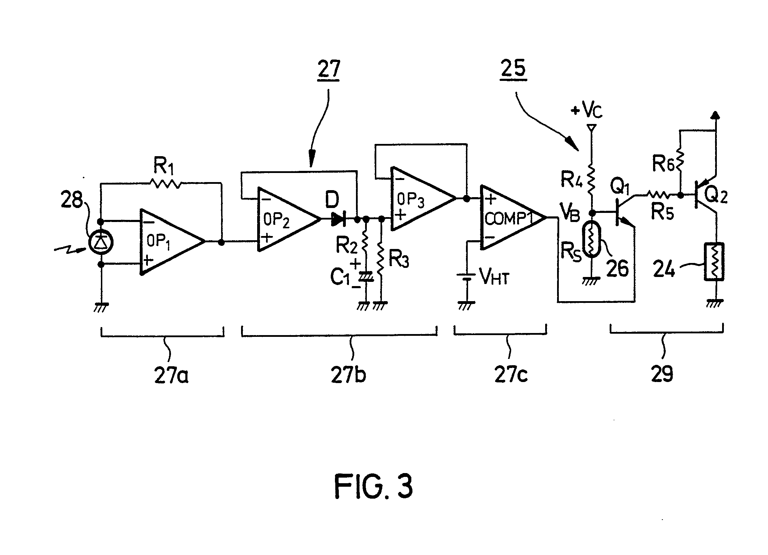

Fig. 3 represents a concrete circuit configuration of the temperature circuit 25, the received light quantity decision circuit 27, and the driving circuit 29 shown in Fig. 1. First, the received light quantity decision circuit 27 will be taken up for description. The received light quantity decision circuit 27 comprises a photoelectric conversion part 27a, a peak holding part 27b, and a comparison part 27c. The photoelectric conversion part 27a has an operational amplifier $OP_1$, and the light receiving element (photodiode, for example) 28 is connected between (+) input end and (-) input end in an indicated polarity. Then, a feedback resistance $R_1$ is provided between its output end and (-) input end. Further, an electrical signal corresponding to a quantity of light received on the light receiving element 28 is generated to the output end of the

operational amplifier $OP_1$.

The peak holding part 27b inputs an output of the photoelectric conversion part 27a, and holds a peak value of the input on a sufficiently large time constant so as to prevent the output from decreasing sharply against an instantaneous decrease of the quantity of light due to operation for detecting an object and others. Consequently, the peak holding part 27b has two operational amplifiers $OP_2$, $OP_3$, a capacitor $C_1$ for setting the time constant and resistances $R_2$, $R_3$. That is, the output end of the operational amplifier $OP_1$ is connected to (+) input end of the operational amplifier $OP_2$. Then, an output end of the operational amplifier $OP_2$ is connected to (+) input end of the operational amplifier $OP_3$ through a reverse blocking diode $D_1$ and is also connected to its (-) input end. Further, a series cir cuit of the resistance $R_2$ and the capacitor $C_1$ and the resistance $R_3$ are connected on a cathode side of the diode $D_1$ toward a ground. Then, an output end of the operational amplifier $OP_3$ is connected to (-) input end of same operational amplifier $OP_3$.

The comparison part 27c has a comparator $Comp_1$, and compares an output level of the peak holding part 27b which is impressed on the (+) input end with a reference voltage VHT set beforehand. Then, if the output level of the peak holding part exceeds the reference voltage VHT, an "H" level output is generated, but if it is the reference voltage VHT or below contrary, an "L" level output is generated.

The temperature circuit 25 is that of connecting a resistance $R_4$ and a thermistor $R_s$ or the heat sensor 26 in series between a power source $+V_c$ and a ground, and an electrical signal (voltage $V_B$) corresponding to ambient temperature is generated between both the two.

The driving circuit 29 has npn transistor $Q_1$ for inputting the voltage $V_B$ to the base. An emitter of the transistor $Q_1$ is connected to an output end of the comparator $C_{omp1}$, and a collector is connected to a base of pnp transistor $Q_2$ through a resistance $R_5$. The heating unit 24 is connected between collector and ground of the transistor $Q_2$. Then, the emitter is connected to a power source (not indicated) for the heating unit 24 and is also connected to the base of same transistor $Q_2$ through a resistance $R_6$.

In the aforementioned construction, a pulsating light projected from the light emitting part which is not illustrated is received by the light receiving element 28 of the light receiving part. A current corresponding to the quantity of received light flows to the light receiving element 28 and is converted into voltage by the operational amplifier $OP_1$. Then, the voltage signal corresponding to the quantity of received light after conversion has its peak value held by the peak holding part 27b on a predetermined time constant. The value thus held is compared with the reference voltage VHT by the comparator $C_{omp1}$.

Here, the quantity of received light is sufficient in normal measuring state, therefore an output level of the peak holding part 27b is the reference voltage VHT of the comparator $C_{omp1}$ or over, and the comparator $C_{omp1}$ generates the "H" level output. However, if the quantity of received light decreases due to dewing or the like, the output of the peak holding part 27b also decreases gradually, and when it reaches the reference voltage VHT or below, the output of the comparator $C_{omp1}$ is inverted to the "L" level.

On the other hand, when ambient temperature drops, resistance value of the thermistor $R_s$ or heat sensor 26 in the temperature circuit 25 increases, and a value of the voltage $V_B$ which is partial with the resistance $R_4$ increases. Then, when the voltage $V_B$ becomes about 0.6V from the ambient temperature having dropped to a value to dewing, the transistor $Q_1$ is kept on. Needless to say, the output of the comparator $C_{omp1}$ must be inverted to the "L" level due to a decrease in the quantity of received light for the transistor $Q_1$ to be on. That is, dewing is so decided from the quantity of received light coming to a threshold or below and the ambient temperature dropping to a predetermined temperature or below, and thus the transistor $Q_1$ is kept on. The transistor $Q_2$ is also kept on simultaneously with the transistor $Q_1$ being on, and a current is carried to the heating unit 24 to heating.

The beam transmission part 23 surrounded by the heating unit 24 is heated on a heat of the heating unit 24, and a dew on the portion is removed. The beam transmission part 23 is heated efficiently by the heating unit 24 as the heating unit 24 is provided to surround the beam transmission part 23, temperature of the portion is raised instantaneously on a small power, and the dew can be removed immediately. That is, a dew could be removed experimentally on a small power of 100 mW or so under the environment of -20 °C.

When the quantity of received light increases according to a removal of the dew, an output of the comparator $C_{omp1}$ comes to the "H" level, therefore the transistors $Q_1$ and $Q_2$ are kept off, and a conduction to the heating unit 24 is cut off.

Then, while the output of the comparator $C_{omp1}$ becomes "L" level from a decrease in the quantity of received light, the ambient temperature does not drop, and unless the voltage $V_B$ rises up to 0.6V, the transistors $Q_1$, $Q_2$ are not kept on, and a current is not carried to the heating unit 24. That is, the ambient temperature being kept from dropping may indicate that the quantity of received light has been decreased not by dewing but by another cause, and hence no current is carried to the heating unit 24 in such case.

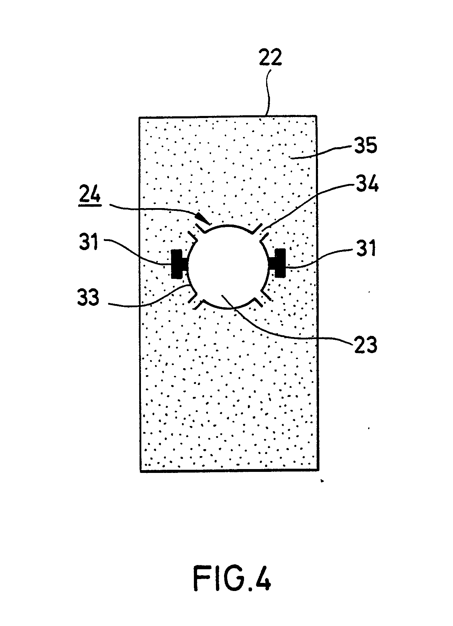

Fig. 4 shows the light transmitting plate 22 applied to a transmissive photoelectric switch. As is known well, the transmissive photoelectric switch has the light emitting part and the light receiving part constructed separately, which are disposed opposite each other, and a light projected from the light emitting part is received on the light receiving part. Accordingly, the circular beam transmission part 23 allowing only the beam of light incident on the light receiving part to pass through is formed on the light transmitting plate 22 provided on the front of a body having the light receiving part. Accordingly, the current passage 33 constituting the heating unit 24 is formed circularly to surround the beam transmission part 23, and a plurality of gaps 34 are provided halfway thereof. Then, the carbon material as a resistor is applied entirely to an outside of the circular current passage 33 excluding the electrodes 31.

In the aforementioned construction, the narrow beam transmission part 23 is also heated instantaneously by conduction to the heating unit 24, and a dew can be removed in a short time. Further, since the carbon material (black) 35 is applied entirely to the outside of the circular current passage 33, a reasonable effect is ensured as in the case of coating and blacking a portion other than the beam transmission part 23 of the light transmitting plate 22. That is, the photoelectric switch body 21 can be hidden internally.

As described above, according to the invention, a conduction to the heating unit is controlled with a drop of ambient temperature and a decrease in the quantity of received light as AND conditions, therefore a dew can immediately be removed, and the conduction to the heating unit can be cut off immediately at the time of recovery of the quantity of received light after the dew is removed, thus coping swiftly with change in the environment. Further, a cheap and compact built-in type may be employed in structure therefor.

## Claims

(1) A photoelectric switch, comprising:
a heating unit formed around a beam transmission part of a light transmitting plate provided on a body having a light receiving part;
a received light quantity decision circuit for generating an electrical signal corresponding to a quantity of light received on said light receiving part, comparing the electrical signal with a set level to decide whether or not it is on the set level or below;
a temperature circuit for generating an electrical signal corresponding to a change in ambient temperature of said body;
a driving circuit for actuating said heating unit to heat on condition that the electrical signal of the temperature circuit has reached a level of set temperature or below, and that said quantity of received light has come to the set level or below.

FIG.1

FIG.2

FIG. 3

22

35

24

34

31

31

33

23

FIG.4

FIG.5

FIG.6